# EUROPÄISCHE PATENTSCHRIFT

(11) **EP 1 377 774 B1**
(45) Veröffentlichungstag und Bekanntmachung des Hinweises auf die Patenterteilung: **26.10.2005**
(21) Anmeldenummer: 02716982.0
(22) Anmeldetag: 03.04.2002
(51) Int. Cl.: F16L 37/00, F16L 31/00

(54) **SCHLAUCHANSCHLUSSSYSTEM MIT SCHLAUCHKODIERUNG**
TUBING CONNECTION SYSTEM COMPRISING TUBING CODING
SYSTEME DE CONNEXION DE TUYAU A CODAGE DE TUYAU

(30) Priorität: 03.04.2001 DE 10116566
(43) Veröffentlichungstag der Anmeldung: 07.01.2004
(73) Patentinhaber: Koninklijke Philips Electronics N.V., 5621 BA Eindhoven (NL)
(72) Erfinder: ZWIRNER, Jörg, NL-5656 AA Eindhoven (NL)
(74) Vertreter: Schouten, Marcus Maria
(86) Internationale Anmeldenummer: PCT/IB2002/001045
(87) Internationale Veröffentlichungsnummer: WO 2002/086373

(56) Entgegenhaltungen:
- EP-A- 0 279 925
- US-A- 4 679 827
- US-A- 5 178 208
- US-A- 5 307 995

## Beschreibung

### Hintergrund der Erfindung

Die vorliegende Erfindung betrifft ein Schlauchanschlusssystem mit einem ersten Anschluss zur Kontaktierung mit einem Schlauch und einen zweiten Anschluss zur Kontaktierung mit einem zweiten Schlauch.

Für viele Anwendungen, insbesondere im medizinischen Bereich, müssen Schläuche auf Anschlüsse gesteckt werden oder anderweitig angefügt (beispielsweise geschraubt) werden. Über diese Schläuche werden dann Flüssigkeiten oder Gase, z.B. zu einem Gerät, hin- oder davon abtransportiert.

Ein typisches Beispiel im medizinischen Bereich ist ein Gassensor, bei dem ein Gas (z.B. ein Anästhesie- oder Atemgas) zu einem Gerät mit einer Gassensorik zunächst hin- und dann das Gas oder die Flüssigkeit wieder herausgeführt wird.

Ein Vertauschen von Ein- und Auslasseinrichtung ist jedoch in einer Reihe vor Anwendungen, wie bei medizinischen Gassensoren, nicht unbedingt als Fehler zu erkennen. Das Gerät misst zwar, die Werte sind jedoch falsch.

Aus der US 5,307,995 ist ein Rasen- und Gartensprayer bekannt, der einen Tank mit einem Schlauchanschluss aufweist. Zum Anschluss eines einzigen Schlauches an den Tank ist eine rohrförmige Tanköffnung vorgesehen, die ein Gewinde aufweist. Innerhalb dieser Tanköffnung ist ein Adapter mittels eines O-Ringes gelagert, der endseitig außerhalb des Tankes eine Schulter aufweist. Über diese Schulter wird der anzuschließende Schlauch gestülpt. Ein Klemmelement wird mittels des Schraubengewindes mit der Öffnung des Tanks fest verbunden, wobei der Schlauch zwischen Klemmelement und Adapter fixiert wird.

Aus der EP 279 925 A1 ist ein Verbindungsstück zum Verbinden von zwei Schläuchen mit den wesentlichen Merkmalen des Oberbegriffs von Anspruch 1 bekannt. Mittels dieses Verbindungsstückes wird eine Verbindung von zwei Schläuchen mit unterschiedlichen Durchmessern ermöglicht. Dabei werden zur Verbindung die Schlauchenden mit dem Verbindungsstück verklebt. Somit wird eine feste und dauerhafte Verbindung zwischen den Schläuchen hergestellt.

Aus der US 5,179,208 ist Schnellverbindung bekannt, die in der Automobiltechnik zur Montage eingesetzt wird. Mittels dieser Schnellverbindung werden mehrere Schläuche gleichzeitig angeschlossen. Dabei werden die einzelnen Schlauchenden mit einem Flansch verbunden. Der Flansch ist mit Stiften zur Zentrierung und Positionierung versehen. Durch Montage des Flansches werden alle mit dem Flansch verbundenen Schlauchenden gleichzeitig angeschlossen, wobei nur eine einmalige Positionierung und Montage des Flansches erforderlich ist.

### Zusammenfassung der Erfindung

Der vorliegenden Erfindung liegt die Aufgabe zugrunde, bei Anwendungen bei denen die Durchflussrichtung des Gases oder der Flüssigkeit von Bedeutung ist sicherzustellen, dass ein Vertauschen von Ein- und Auslassrichtung oder allgemein ein Vertauschen von zwei Schläuchen auf Anschlusselementen vermieden wird.

Die Aufgabe wird gelöst durch die Merkmale des unabhängigen Anspruches. Vorteilhafte Ausführungsformen werden in den abhängigen Ansprüchen angeführt.

Entsprechend der vorliegenden Erfindung werden um sicher zu stellen, dass die Anschlüsse oder bzw. die Schläuche nicht vertauscht werden, die Schläuche mit unterschiedlichen Innendurchmessern und die dazugehörigen Anschlüsse mit dementsprechend Außendurchmessern versehen. Bei entsprechender Dimensionierung der Durchmesser kann erreicht werden, dass ein Kontaktieren ohne große Kraftaufwendung nur bei richtigen Schlauch-/Anschlusspaarungen erfolgen kann. Hierdurch kann das durchflussrichtige Anschließen von Schläuchen an ein Gerät durch eine Durchmesserkodierung der Schläuche und eine entsprechende Gestaltung der dazugehörigen Anschlüsse gewährleistet werden.

Die erfindungsgemäße Kodierung benötigt zur Anschlusssicherung keine zusätzlichen Bauteile und es entsteht auch kein Zusatzaufwand bei einer Montage. Die Steckpositionen werden vor der Montage deutlich erkennbar. Die Innendurchmesser der Schläuche sind beliebig wählbar und können auch gleich groß gewählt werden, z.B. falls dies strömungstechnisch notwendig ist.

Dies führt insgesamt zu einer recht kostengünstigen Lösung bei einer einfachen und übersichtlichen Geometrie.

Um allerdings nicht nur ein richtiges Anschließen der Schläuche wirksam sicher zu stellen, sondern um weiter zu gewährleisten, dass ein falsches Anschließen nicht gewaltsam erzwungen werden kann, wird in einer bevorzugten Ausführungsform der Erfindung weiterhin noch eine Außendurchmesserbegrenzung für einen der zu kontaktierenden Schläuche vorgesehen. Damit wird nicht nur korrektes Anschließen gefördert, sondern auch ein fehlerhaftes Anschließen ausgeschlossen oder zumindest bestmöglich vermieden. Hierdurch kann ein nahezu absoluter Schutz gegen Vertauschen der Schläuche erreicht werden.

Vorzugsweise wird das Aufstecken oder anderweitige Anbringen des Schlauchs mit einem größeren Außendurchmesser auf den Anschluss mit einem kleineren Außendurchmesser durch einen Außenring an diesem Anschluss verhindert. Hierzu wird der Außenring-Innendurchmesser kleiner als der Außendurchmesser des dickeren Schlauchs gewählt.

Für die Außendurchmesserbegrenzung können bevorzugt bereits vorhandene Bauelemente mit eingesetzt werden, was wiederum zu kostengünstigen Lösungen führt.

### KURZE BESCHREIBUNG DER ZEICHNUNGEN

Die Erfindung wird im Folgenden weiter unter Heranziehung der Zeichnungen erläutert, wobei sich gleiche Referenzzeichen auf funktional gleiche oder ähnliche Merkmale beziehen.

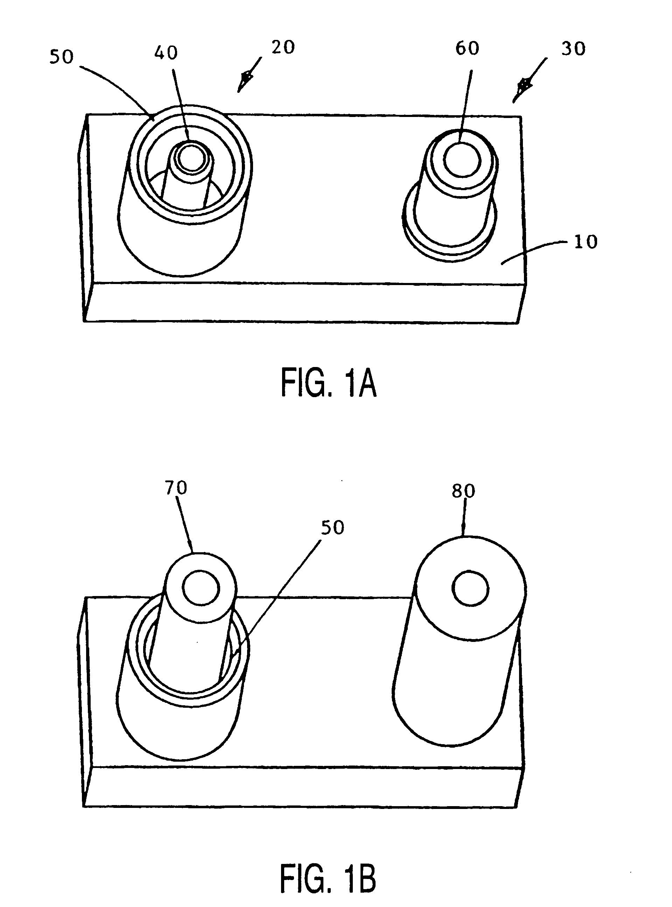

Figuren 1A und 1B zeigen eine erfindungsgemäße Schlauchkodierung.

### DETAILLIERTERE BESCHREIBUNG DER ZEICHNUNGEN

Fig. 1A zeigt zwei an einem Gerät 10 angebrachte Schlauchanschlüsse 20 und 30. Der erste Anschluss 20 weist einen Stutzen 40 und eine Außendurchmesserbegrenzung 50 auf. Der zweite Anschluss 30 hingegen weist lediglich einen Stutzen 60, jedoch keine Außendurchmesserbegrenzung auf.

Beide Stutzen 40 und 60 sind rohrförmig ausgeführt, so dass ihr Inneres hohl und zur Weiterführung oder zum Empfang gasförmiger oder flüssiger Stoffe geeignet ist. Der Außendurchmesser des Stutzens 40 ist deutlich kleiner gewählt als der Außendurchmesser des Stutzens 60. Die Innendurchmesser (bzw. die Rohrdurchmesser) der Stutzen 40 und 60 sind beliebig und können auch gleich gewählt werden.

Fig. 1B zeigt das Gerät 10 mit den beiden Schlauchanschlüssen 20 und 30 aus Fig. 1A, wobei jedoch in Fig. 1B ein erster Schlauch 70 an den ersten Anschluss 20 und ein zweiter Schlauch 80 auf den zweiten Anschluss 30 aufgesteckt sind. Die beiden Schläuche 70 und 80 verdecken in der Ansicht von Fig. 1B die beiden Schlauchanschlüsse 20 und 30.

Der Innendurchmesser des ersten Schlauchs 70 ist geringfügig kleiner gewählt als der Außendurchmesser des ersten Stutzens 40 des Anschlusses 20, so dass der erste Schlauch 70 auf dem ersten Stutzen 40 gehalten wird. Entsprechend ist der Innendurchmesser des zweiten Schlauchs 80 geringfügig kleiner als der Außendurchmesser des zweiten Stutzens 60 gewählt, so dass der zweite Schlauch 80 ebenfalls formschlüssig auf dem zweiten Stutzen 60 gehalten wird. Die Innendurchmesser der Schläuche 70 und 80 können aber auch gleich groß gewählt werden, falls dies strömungstechnisch notwendig ist.

Es bedarf keiner detaillieteren Ausführungen, dass an Stelle eines Aufsteckens auch andere Verbindungsweisen, wie Schrauben, verwendet werden können.

Um sicher zu stellen, dass der zweite Schlauch 80 nicht auf den kleineren ersten Stutzen 40 gesteckt werden kann, ist der Außendurchmesser des zweiten Schlauchs 80 so gewählt, dass dieser (nicht nur geringfügig) größer als der Innendurchmesser der Außendurchmesserbegrenzung 50 ist. Der Außendurchmesser des ersten Schlauchs 70 hingegen wird so gewählt, dass er kleiner als der Innendurchmesser der Außendurchmesserbegrenzung 50 ist, und so der erste Schlauch 70 ohne weiteres in die Außendurchmesserbegrenzung 50 hineinpasst.

## Patentansprüche

1. Schlauchanschlusssystem aufweisend:
einen ersten Anschluss (20) mit einem ersten Anschlusselement (40) zur Kontaktierung mit einem ersten Schlauch (70) mit einem ersten Außendurchmesser und
einem zweiten Anschluss (30) mit einem zweiten Anschlusselement (60) zur Kontaktierung mit einem zweiten Schlauch (80) mit einem zweiten Außendurchmesser, wobei der erste Anschluss (20) ferner eine Außendurchmesserbegrenzung (50) aufweist
und der Innendurchmesser der Außendurchmesserbegrenzung (50) kleiner ist als der zweite Außendurchmesser aber größer ist als der erste Außendurchmesser, **dadurch gekennzeichnet, dass** der erste und der zweite Schlauch (70, 80) lösbar mit dem ersten und dem zweiten Anschlusselement (40, 60) verbunden sind.

2. Schlauchanschlusssystem nach Anspruch 1, **dadurch gekennzeichnet, dass** die Innendurchmesser der Schläuche (70, 90) gleich groß sind.

3. Schlauchanschlusssystem nach Anspruch1, **dadurch gekennzeichnet, dass** der Innendurchmesser des ersten Schlauchs (70) geringfügig kleiner ist als der Außendurchmesser des ersten Anschlusselements (40) und der Innendurchmesser des zweiten Schlauchs (80) geringfügig kleiner ist als der Außendurchmesser des zweiten Anschlusselementes (60).

4. Schlauchanschlusssystem nach Anspruch 1, **dadurch gekennzeichnet, dass** für die Verbindung von Schlauch (70, 80) und Anschlusselement (40, 60) eine Schraubverbindung vorgesehen ist.

5. Schlauchanschlusssystem nach Anspruch 1, **dadurch gekennzeichnet, dass** das erste (40) und das zweite Anschlusselement (60) rohrförmig ausgeführt sind, so dass ihr Inneres hohl und zur Weiterführung oder zum Empfang gasförmiger oder flüssiger Stoffe geeignet ist.

6. Gerät umfassend einen medizinischen Gassensor und ein Schlauchanschlusssystem nach einem der vorangegangenen Ansprüche, wobei das Schlauchanschlusssystem für die Gaszufuhr und Gasabfuhr vorgesehen ist.

## Claims

1. A tube connection system, which includes:
a first connector (20) with a first connector (40) which is to be contacted by a first tube (70) having a first outer diameter, and a second connector (30) with a second connector (60) which is to be contacted by a second tube (80) having a second outer diameter, in which the first connector (20) further has an outer diameter limit (50) and the inner diameter of the outer diameter limiter (50) is smaller than the second outer diameter but larger than the first outer diameter, **characterized in that** the first and the second tube (70, 80) are removably connected to the first and the second connector (40, 60).

2. A tube connection system as claimed in claim 1, **characterized in that** the inner diameters of the tubes (70, 80) are equally large.

3. A tube connection system as claimed in claim 1, **characterized in that** the inner diameter of the first tube (70) is slightly smaller than the outer diameter limiter of the first connector (40) and the inner diameter of the second tube (80) is slightly smaller than the outer diameter of the second connector (60).

4. A tube connection system as claimed in claim 1, **characterized in that** a screwed connection is provided for the connection from tube (70, 80) to connector (40, 60)

5. A tube connection system as claimed in claim 1, **characterized in that** the first (40) and the second connector (60) are tubular so that their inside is hollow and suitable for transporting or receiving gaseous or fluid material.

6. A device comprising a medical gas sensor and a tube connection system as claimed in one of the preceding claims, in which the tube connection system is provided for the gas supply and discharge.

## Revendications

1. Système de raccordement de flexible présentant :
un premier raccord (20) avec un premier élément de raccord (40) pour le contact avec un premier flexible (70) doté d'un premier diamètre extérieur et un deuxième raccord (30) avec un deuxième élément de raccord (60) pour le contact avec un deuxième flexible (80) doté d'un deuxième diamètre extérieur, le premier raccord (20) présentant par ailleurs une délimitation du diamètre extérieur (50) et le diamètre intérieur de la délimitation du diamètre extérieur (50) étant inférieur au deuxième diamètre extérieur mais supérieur au premier diamètre extérieur, **caractérisé en ce que** les premier et deuxième flexibles (70, 80) sont fixés de manière amovible avec les premier et deuxième éléments de raccord (40, 60).

2. Système de raccordement de flexible selon la revendication 1, **caractérisé en ce que** les diamètres intérieurs des flexibles (70, 80) sont d'égale grandeur.

3. Système de raccordement de flexible selon la revendication 1, **caractérisé en ce que** le diamètre intérieur du premier flexible (70) est légèrement inférieur au diamètre extérieur du premier élément de raccord (40) et le diamètre intérieur du deuxième raccord (80) est légèrement inférieur au diamètre extérieur du deuxième élément de raccord (60).

4. Système de raccordement de flexible selon la revendication 1, **caractérisé en ce qu'**un raccord vissé est prévu pour la fixation du flexible (70, 80) et de l'élément de raccord (40, 60).

5. Système de raccordement de flexible selon la revendication 1, **caractérisé en ce que** les premier (40) et deuxième (60) éléments de raccord sont de conception tubulaire de telle sorte que leur intérieur soit creux et convienne pour le transfert ou pour la réception de substances gazeuses ou liquides.

6. Appareil comprenant un capteur de gaz médical et un système de raccordement de flexible selon l'une des revendications précédentes, le système de raccordement de flexible étant prévu pour amener et évacuer du gaz.
